# EUROPEAN PATENT APPLICATION

(11) **EP 0 585 614 A2**
(43) Date of publication of application: **09.03.1994**
(21) Application number: 93112225.3
(22) Date of filing: 30.07.1993
(51) Int. Cl.: B01D 63/02

(54) **Hollow fiber permeator with tubesheet preform**

(30) Priority: 03.08.1992 US 923590
(71) Applicant: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventor: Walker, James Baird, Wilmington, Delaware 19803 (US); Johannsen, Lyle Odean, Townsend, Delaware 19734 (US); Ubersax, Richard Walter, Wilmington, Delaware 19810 (US)
(74) Representative: Jones, Alan John

(57) **Abstract**

The invention is a simple and effective method for producing a hollow fiber membrane tubesheet. The hanks of the hollow fibers are inserted in a tubesheet preform having a plurality of cells. The ends of the hollow fibers and the tubesheet preform are embedded in a potting material to form a tubesheet which improves the performance of the permeator and the ease of manufacture.

## Description

### DESCRIPTION OF THE INVENTION

The invention pertains to permeators having a plurality of hollow fiber membranes in which at least one end portion of a bundle of the hollow fiber membranes is embedded in and extends through a tubesheet having a tubesheet preform. The invention also relates to a method of fabricating a tubesheet for a hollow fiber separation apparatus and to devices obtained by the method.

### BACKGROUND OF THE INVENTION

A membrane separation process is an operation which separates at least one component from a fluid mixture comprising various components by the use of a membrane having a selective permeability to fluid. The fields to which said process is applicable include gas permeation, liquid permeation, dialysis, ultrafiltration, reverse osmosis, etc. Specific application examples of the process are separation of gas mixtures, conversion of sea water into fresh water, desalting of saline water, purification of waste water, condensing of fruit juice, refining of protein, separation of oil from water, artificial kidney, artificial lung, etc. The membrane is used in the form of film, tube, hollow fiber or the like. Especially, a hollow fiber is advantageous in having a large membrane area per unit volume and good separation efficiency. When, however, a hollow fiber is used, particularly a fine hollow fiber, any error in assembly or design will result in loss of the advantages inherent to the hollow fiber.

Permeators containing hollow fiber membranes are characterized by having at least one end of each of the hollow fiber membranes embedded in a solid material in a fluid tight manner to form a tubesheet. This tubesheet is typically composed of a potting material, typically a crosslinkable epoxy resin, which provides support for the hollow fibers in the permeator, mechanical integrity to withstand operating pressure and temperature conditions, chemical resistance, and imparts a tight seal to prevent fluid communication between the exterior side and the bore side of each of the hollow fiber membranes except through the walls of the hollow fiber membranes. The epoxy resin support and the embedded hollow fiber membranes are referred to as a tubesheet.

The bundle of fibers is normally initially in the form of a hank with at least one end being embedded in the resin and is transformed into a bundle during the subsequent operation of putting the hollow fibers into communication with the outside, by slicing the tubesheet so as to cut off the loops of fiber projecting therefrom. The fiber tubesheet assembly is placed, together with suitable sealing means, in a pressurizable casing or shell. Depending on the application, the feed fluid is supplied to either the exterior or the interior of the fibers under sufficient pressure to cause permeation through the membrane walls. The pressure differential, between the back of the tubesheet - from which the unpotted fiber portions extend - and the tubesheet face, exerts a force which can be very substantial. This force tends to deform the tubesheet and results in stresses which can lead to failure. Thus, some means of supporting the tubesheet is generally required. As such, it is necessary that the tubesheet be strong enough to withstand large stresses encountered when fluid pressure is applied to the tubesheet during operation of the permeator. The tubesheet and the hollow fiber membranes must also be easily machinable in order to facilitate the construction of the permeator and to prevent damaging or smearing the fragile hollow fiber membranes. In order to give the required strength to the tubesheet, and in particular strength to withstand the pressure differences applied between the two faces of the tubesheet, it is often necessary to increase the thickness of the tubesheet, thereby losing a corresponding length of useful hollow fiber membrane and increasing the overall weight of the permeator. It is also known to add reinforcing devices to the tubesheet, with various different types of reinforcing devices being known. The load carrying capacity of the tubesheet may also be increased by adding fillers or reinforcing materials to the potting material.

U.S. Patent No. 4,917,798 describes a method for making a reinforced hollow fiber permeator in which at least one end of a hank of hollow fibers is coated with an epoxy resin. Independent reinforcing sleeves are then fitted over the end of the hank. Several hanks of hollow fiber are prepared in this manner and then assembled by using the epoxy resin to bond the reinforced banks together into a tubesheet.

The method described in U.S. Patent No. 4,917,798 limits the strength, stiffness, geometry and fiber distribution of the permeator's tubesheet. Particularly, the number of hanks that may be used in the permeator is limited because the banks must be assembled into a bundle. The efficiency of the permeator is poor because the fibers do not extend across the full cross-sectional area of the permeator. Also, excessive handling of the fragile hollow fiber membranes during fabrication may cause damage to the membranes, ultimately impairing the separation properties of the permeator. In addition, the uniformity and reproducibility of fiber distribution in the respective independent sleeves is poor. Moreover, the strength and stiffness of the final tubesheet described in U.S. Patent No. 4,917,798 is limited because it is controlled by the strength and integrity of the epoxy resin used as a bonding material. The deficiencies of prior art tubesheets, including the tubesheet described in U.S. Patent 4,917,798, derive from the potting material and the care with which the fiber hanks and reinforcements are assembled and bonded.

### SUMMARY OF THE INVENTION

The present invention provides a permeator in which the hollow fiber membranes are embedded in and extend through a tubesheet having a tubesheet preform. The tubesheet preform supports the hollow fiber membranes and protects the tubesheet from damaging deformation or stress in a manner which is simple, effective, inexpensive and overcomes the disadvantages of the prior art. The tubesheet preform is the basic element of the tubesheet, providing the strength, stiffness and basic geometry. The potting material provides the seal. The tubesheet preform also provides an attachment means for the permeator shell or an endcap. The tubesheet with the tubesheet preform provides improved strength, stiffness and support for the hollow fibers, improved mechanical integrity to withstand operating pressures, chemical resistance and imparts a fluid-tight seal.

The method of the invention consists of inserting at least one end of a plurality of hanks of hollow fiber membrane into the openings of a tubesheet preform. The end of the hank along with the tubesheet preform is embedded in a potting compound, typically an epoxy resin, to form a tubesheet. The potting compound also seals the fibers to each other and to the tubesheet preform. The ends of hollow fibers extending from the end of the preform are then easily and efficiently skived to place then into communication with the outside.

The tubesheet having the tubesheet preform is stronger and stiffer than reinforced tubesheets known in the prior art. The disposition of the fibers is more readily controlled. Also, the handling of the hollow fiber membranes is minimized, thereby reducing the possibility of damage to the membranes which may impair the operation of the permeator.

### BRIEF DESCRIPTION OF THE DRAWINGS

Implementations of the invention are described by way of example with reference to the accompanying drawings:
Figure 1 is a plan view showing the preferred embodiment of a tubesheet preform, having hexagonal cell openings;
Figure 2 is a plan view of another embodiment of a tubesheet preform having square cell openings;
Figure 3 is a plan view showing another embodiment of the invention having square cell openings;
Figure 4 is a side view in partial section of a tubesheet illustrating the disposition of hanks after insertion in the tubesheet preform;
Figure 5 is a side view in partial section of a tubesheet illustrating the disposition of the hanks after casting the end of the bundle in a potting material, but before opening the ends of the fibers;
Figure 6 is an alternate embodiment of the invention showing a permeator in partial section with tubesheet preforms at both ends of the bundle having square openings and different overall dimensions;
Figure 7 is a cross-sectional view of a permeator with a reinforcing stud; and
Figure 8 is another embodiment of the permeator shown in Figure 7.

### DETAILED DESCRIPTION OF THE INVENTION

A tubesheet preform is a structure that has the general shape that is desired for the finished bundle tubesheet. If desirable, the peripheral surfaces of the tubesheet preform can be precisely the finished geometry of the permeator. For example, if it is desired to have a bundle that has a circular tubesheet, then the peripheral surface of the preform is circular; if the bundle is to have a noncircular tubesheet cross-section, then the peripheral surface of the preform is noncircular - rectangular for example. In one example, the peripheral surface of the preform is a piece of six-inch diameter Schedule 40 aluminum pipe. In another example, the peripheral surface is a piece of rectangular plastic pipe. In another example, the peripheral surface is simply the outside surface of the potting material. For a given geometry, the length of the preform is dictated by loading requirements, sealing requirements, and end-cap joining requirements.

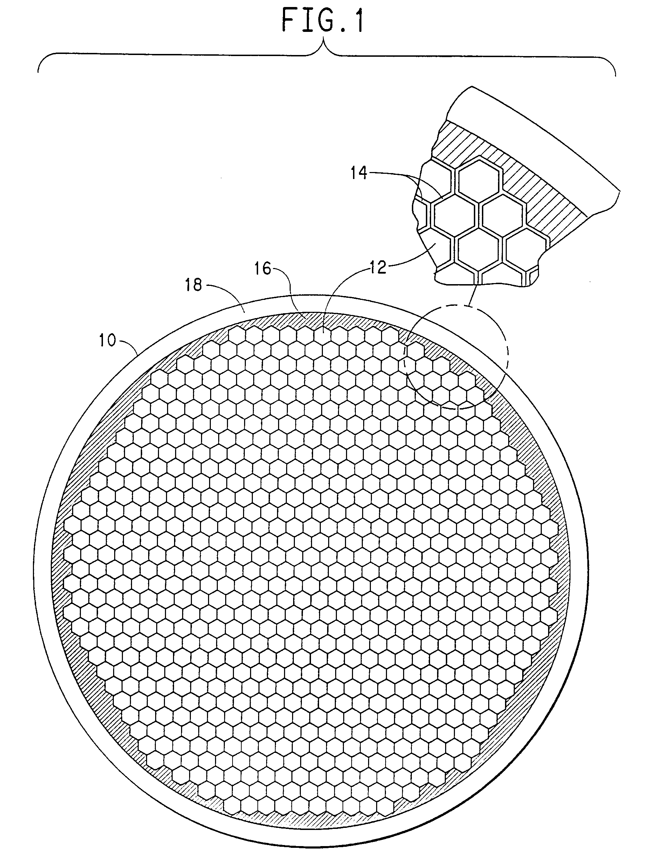

The tubesheet preform is a structure having a core of cells to receive a given number of hollow fibers. Figure 1 is the preferred embodiment of the invention. It is a plan view showing a tubesheet preform 10 having hexagonal openings 12. The central portion of the tubesheet preform is divided into cells, each cell to receive a given number of hollow fine fibers. In one example, this "core" is an aluminum honeycomb with 1/4-inch cells, the honeycomb core being bonded to the inside of the peripheral structure, for example to the inside diameter of the aluminum pipe or the plastic pipe. In another example, the core is comprised of a rectangular pattern of elements that provides the requisite number of cells. The cell in this example has a hexagonal cross-section. In this case also, the core is bonded to the inside surface of the peripheral structure. The elements 14 form cells 12 which, in Figure 1, are hexagonal in section for reasons of convenience into which the ends of the bundles of fibers are inserted. The elements 14 may be also made in the form of grids, gratings, or lattices of a material which is sufficiently rigid in order to obtain the desired strength (e.g., metal or plastic materials). The ends of the bundle of hollow fiber membranes 15 (not shown in Figure 1) extend through the cells and are embedded in a potting material, preferably an epoxy resin. Bonding means, such as the epoxy resin material or any other suitable glue, adhesive, metal or plastic 16 also bonds the elements 14 to the inside of the peripheral wall of the tubesheet preform 18.

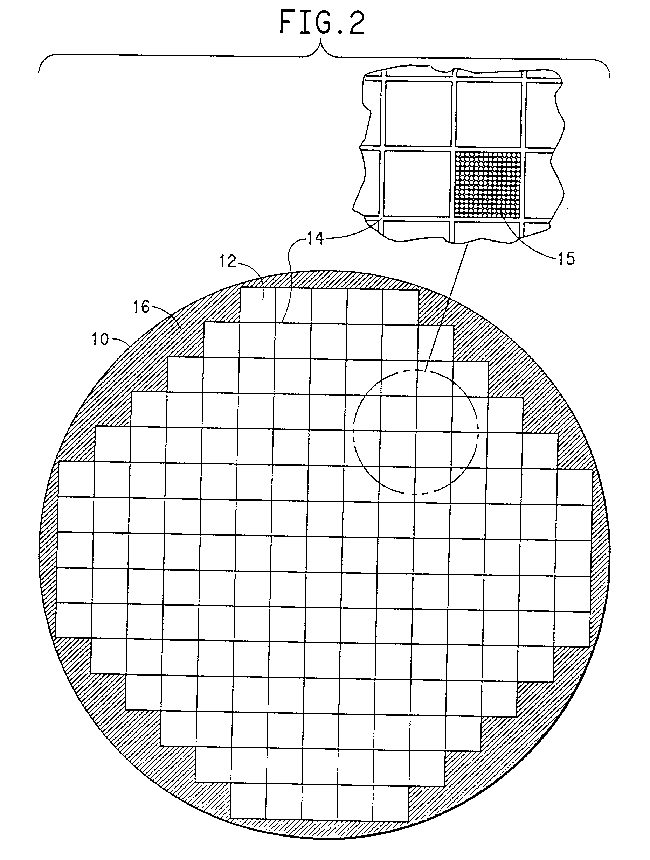

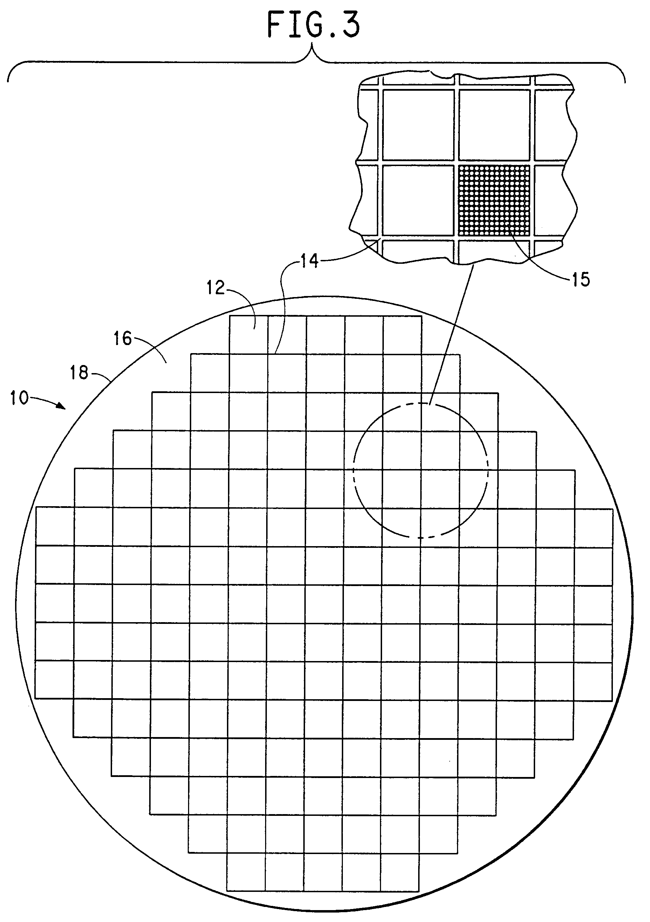

Another particularly advantageous form of tubesheet preform 10 is shown in Figure 2. Figure 2 shows a tubesheet which is the same as the tubesheet shown in Figure 1, provided that (1) the peripheral structure is formed by casting the bonding means around the core of the tubesheet preform and (2) the cells are square. The elements 14 define cells 12 which are in the shape of squares. The bonding means, such as the epoxy resin 16, defiries the geometry of the tubesheet preform 10. The ends of the hollow fiber membranes 15 extend through the cells. Figure 3 shows another embodiment of the tubesheet preform having square cells. In this embodiment, the tubesheet preform is cast as an integral unit, without any potting material bonding the elements in the core of the tubesheet preform to its inside wall. This form comprises a tubesheet preform 10 with elements 14 having a square cross section 12. The elements 14 are integral with the structure of the tubesheet preform 10. The geometry of the tubesheet preform is defined by the periphal wall 18. The ends of the bundle of hollow fiber membranes 15 extend through the cells and are embedded in a resin. In this embodiment the tubesheet preform may be machined or cast as an integral structure.

The open space ratio, the shape, the distribution, the number, the thickness and the size of the openings of the elements are all determined as a function of the desired strength, weight, flow rate and flow distribution. Also, the spacing between the cells and the geometry of the elements and the cells are selected to provide the desired mechanical properties of the completed tubesheet. For example, the spacing between the openings of the elements is designed to ensure that the cells remain strong enough. The length of the tubesheet preform is dictated by loading requirements, sealing requirements and end-cap joining requirements. In Figure 1, the cross-section of the reinforcing elements 14 is hexagonal; in Figures 2 and 3, the cross-section of the reinforcing elements 14 is square. Other cross-sections could naturally be envisaged, for example they could be polygonal and in particular octagonal in order to facilitate obtaining a relatively compact configuration. The tubesheet preform may be fabricated by known methods from metal, plastic, or other conventional materials. The reinforcing cells may be made from a different material than the wall of the tubesheet preform. Some of the factors which may influence the selection of the construction material for the tubesheet preform are cost, density, thermal expansion, chemical resistance, fabrication technique, strength and stiffness. Metal or aluminum materials are preferred because they are inexpensive, relatively lightweight, strong with low elasticity and may readily be fabricated or cast into a wide variety of shapes and sizes. The tubesheet preform can be made in a variety of ways - by assembling the core from a group of elements and bonding said assembly to the peripheral structure; by casting the complete preform; or by casting the core and peripheral structure separately and joining the two in a subsequent operation. The peripheral structure might be cast around the central core.

Such tubesheet preforms constitute a simple, effective and inexpensive means for avoiding any deformation of the tubesheet and for controlling the disposition of fibers under the effect of pressure differences between the two faces of the tubesheet. The improved tubesheet having the tubesheet preform can withstand the pressure differences independent of the epoxy matrix or the fiber distribution.

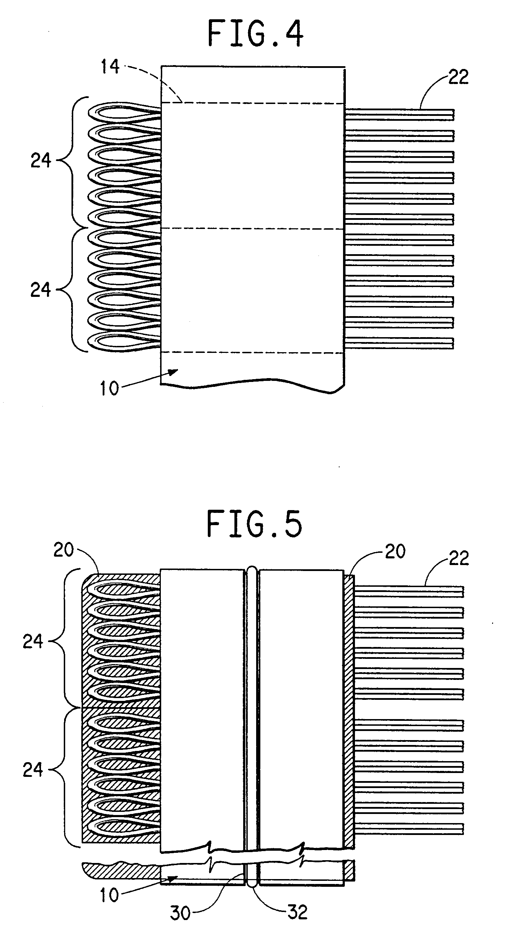

As may be seen in Figure 5, the tubesheet is constituted by a potting material 20; e.g., an epoxy resin, which sticks together the hollow fiber membranes and the cell core of the tubesheet preform 10. Figure 4 shows that the tubesheet constitutes a plurality of elementary bundles 24 of fibers 22 with the elementary bundles 24 being distinct from one another and being separated by elements 14 which surround each of them. Figure 5 shows the tubesheet with the potting material 20. In this embodiment, an O-ring groove 30 and accompanying O-ring 32 facilitate the seal between the outside of the tubesheet preform 10 and the inside surface of the permeator shell.

In addition, the tubesheet of the present invention facilitates installing the hollow fibers in the envelope.

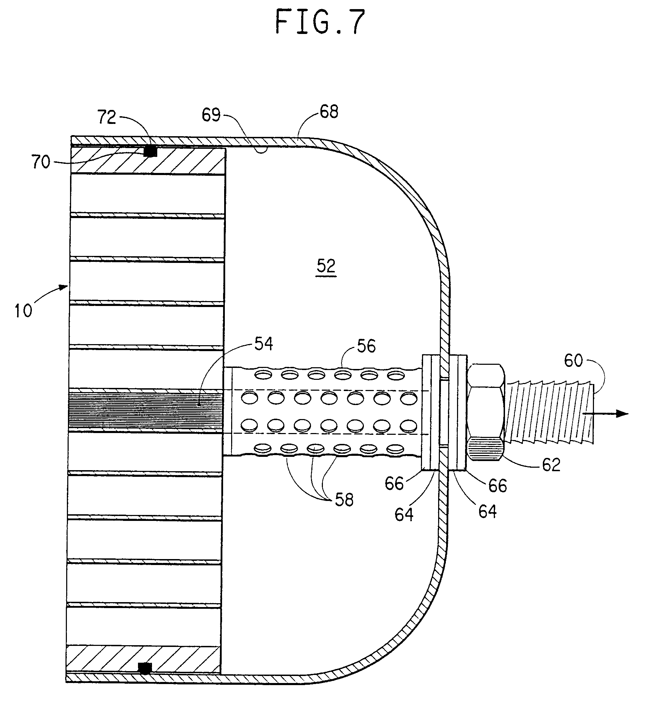

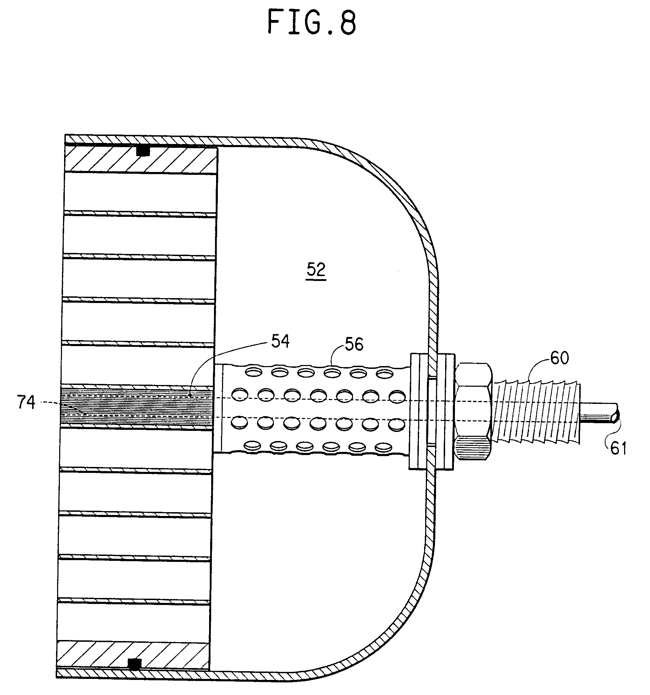

In a manner which is conventional and therefore not described in detail, the assembly constituted by the fibers, the tubesheet(s) and the accompanying tubesheet preform(s) are mounted in an envelope, often a cylindrical envelope, into which the fluid to be treated is introduced either to pass from the outside towards the inside of the fibers so as to escape in purified form beyond the outlet tubesheet, or else so that it passes from the inside towards the outside of the fibers leaving in purified form between the inlet tubesheet and the other end which may be constituted by another tubesheet, or otherwise. In one embodiment of the invention shown in Figure 7, the load-carrying capacity of the tubesheet preform may be improved by connecting the tubesheet preform to the permeator shell or to an end cap by conventional means, such as a screw or a nut and bolt. This structural advantage simplifies the construction of the permeator by allowing the bundle to be fixedly but removably installed in the envelope of the permeator shell. In particular, Figure 7 is a cross-sectional view of a permeator showing the tubesheet preform 10 mounted in a permeator shell 68. An O-ring groove 70 and accompanying O-ring 72 facilitate the seal between the tubesheet preform 10 and the inside wall 69 of the permeator shell 68. A reinforcing element, such as a stud or bolt, 54 is fixedly connected to the tubesheet preform 10 and discharge pipe 56 with a discharge port 60. The discharge pipe 56 has perforations 58 which permits fluid communication between the discharge port 60 and the area 52. A securing means such as a nut 62 and accompanying gaskets 64 and washers 66 fixedly secures the discharge pipe 56 to the permeator shell 68. The configuration and number of the studs is not limiting. One stud is shown for convenience only. Any number of reinforcing elements or studs or other means may be used in any configuration so as to rigidly connect the tubesheet preform to the permeator shell. The stud 54 may also be located within, preferably concentrically within, the discharge pipe 56 so as to enable the stud to be fixedly connected directly to the permeator shell. The stud may also extend through the entire bundle of hollow fibers to the opposing wall of the permeator shell. The stud assists the tubesheet and the tubesheet preform in carrying the pressure load exerted on the tubesheet during operation of the permeator. In addition, the reducing load-carrying capacity of the tubesheet and the tubesheet preform allows the use of O-ring seals between the tubesheet and the permeator shell rather than mechanical bonding. Also, the use of the stud is particularly valuable for tubesheets having non-circular cross-sections where the stress distributions in the

tubesheet and the shell are more complicated. Figure 8 is a partial cross-sectional view of a permeator which discloses a sweep-gas arrangement. A stud 54 is shown as in Figure 7; however, a sweep-gas pipe 61 is situate within and extends through the stud, discharge pipe 56 and discharge port 60. The sweep-gas pipe 61 is connected to an external source of gas, customarily an inert gas such as nitrogen. The sweep gas is used by methods known in the art to facilitate permeation of the fluids to be separated.

The envelope is connected to a network for the fluid to be treated either via its ends, or else via an inlet duct and/or an outlet duct. Whichever disposition is used, the presence of cells subdividing the set of hollow fibers gives rise to better fluid distribution.

As noted above, the tubesheets of the present invention are better able to withstand the forces to which they are subjected due to the pressure difference which exists between the inside and the outside of the envelope. In the preferred embodiment the tubesheet preform furnishes the principal load-bearing reinforcement to the tubesheet. This design provides properties which are superior to the reinforcement of the epoxy matrix and independent sleeves described in U.S. 4,917,798.

The tubesheet preform also provides a permeation apparatus in which the major portions of the hollow fibers are held apart and are fixed in their spatial relationship so as to control and maximize the amount of fiber outer surface area available for contact with the feed fluid, so as to provide substantially uniform flow of feed fluid around the fibers, and so as to provide fibers that are substantially in fixed spatial relationship to one another. Such a spatial relationship improves the efficiency of conventional permeators. In addition, the use of the tubesheet preform facilitates the use of the maximum cross-sectional area of the permeator. The areas of the permeator, especially at the periphery of the bundle, which are devoid of hollow fibers, may be minimized, thereby increasing the efficiency of the permeator.

In order to prepare a tubesheet in accordance with the preferred embodiment of the invention, as shown in Fig. 4, a plurality of banks of hollow fibers 24 are prepared and inserted into the cells 14 of the tubesheet preform 10, after which the appropriate potting material, preferably an epoxy resin, is applied to the ends of the banks of hollow fibers and the tubesheet preform. Potting the ends of the banks may be done, for example, by potting the ends of the bundles in a mold.

Use of the tubesheet preform reduces the demands for the potting material, such as an epoxy matrix. Use of the tubesheet preform also permits the use of a wider range of potting materials, particularly potting materials which may provide less strength and stiffness but are less expensive, easier to apply to ends of the hanks of hollow fibers and more readily machined during the final skiving operation. The tubesheet preform may also be fabricated from high-strength, light weight materials, and therefore may reduce the overall weight of the tubesheet while maintaining or increasing strength. The weight reduction of the tubesheet is particularly important for applications in which the weight is a concern. For example, gas permeators may be used on board helicopters and aircraft, especially combat aircraft, where low weight is critical to high performance operation. The increased strength of the tubesheet enables the permeator to be designed with a narrower tubesheet. In particular, a narrower tubesheet will be strong enough to withstand large stresses encountered when fluid pressure is applied to the tubesheet during operation of the permeator. As such, the increased strength of the tubesheet may ultimately allow further reduction in the overall weight of the tubesheet.

Other important advantages are also attained, particularly improved ease of machinability during the final skiving operation to open the fiber bores. The improved machinability is especially critical in light of the use of hollow fiber membranes and potting materials which tend to compound damage to the fragile hollow fibers during the skiving operation. In particular, the tubesheet preform firmly holds the ends of the banks; as a result a significantly higher number of round, fully open and undistorted fiber bores are observed with the tubesheet containing microsphere filler over unreinforced tubesheets. These benefits translate to other advantages including improved permeator performance from more open fibers, and lower manufacturing costs from faster machining speeds, less skiving rework, less blade drag during skiving, and the preclusion of very expensive hardened cutting blades.

In addition, the use of a plurality of smaller-diameter hanks, which therefore have a smaller radius of curvature at their ends, also reduces the loss of material during fabrication due to that portion of the fibers which is cut off. The use of the tubesheet preform may also allow more variety in the type of seal between the tubesheet and the end fitting of the permeator.

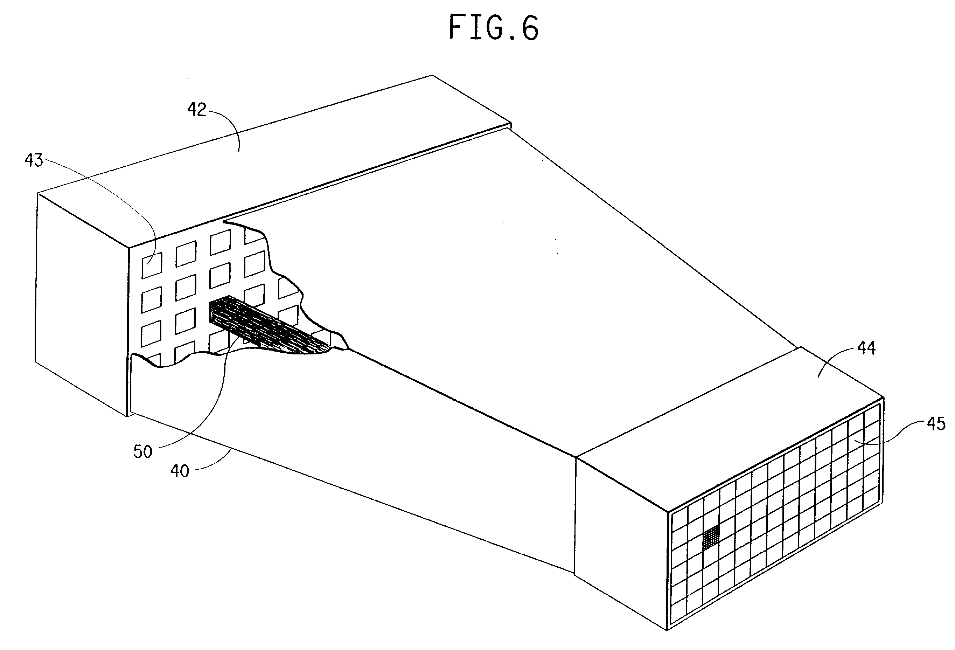

Furthermore, the tubesheet preforms enable the dimensions of the tubesheet sealing surface to be controlled more easily. Also, using tubesheet preforms for the bundle construction allows the freedom to use different shapes or sizes at the ends of a two tubesheet bundle. For example, Figure 6 shows a permeator 40 having tubesheet preforms 42 and 44 respectively at both ends. The tubesheet preforms have square cells 43 and 45; however, the size of tubesheet preform 42 is larger than that of tubesheet preform 44. The different sizes allow greater control of the spacing between the hollow fibers.

The strength and stiffness of the tubesheet preform allow one to reduce the length of the finished tubesheet, increasing the amount of active membrane area for a given overall length of the bundle.

It is also believed that the tubesheet preform improves the performance of the permeator by optimizing the spacing between hollow fibers. The packing density of the fibers from cell to cell will be uniform over the face of the tubesheet, or it can be controlled. A bundle formed by inserting hanks of fibers into the cells of a tubesheet preform provide a region just inboard of the tubesheet where the space around the individual hanks is greater than the space between the individual fibers, so that there is less radial pressure drop, which can facilitate the creation of plug flow of the shell-side sweep gas. With the same number of cells in each tubesheet preform of a two tubesheet bundle, but with a different spacing between the cells at one end from the spacing at the other end, the spacing between individual hanks can be controlled to further control the shell-side pressure drop. This advantage is illustrated in the permeator shown in Figure 6.

The tubesheet preform also improves the method of making hollow fiber permeators. More specifically, the number and disposition of fibers in the bundle is precisely controlled. The production of bundles is more reproducible. Moreover, the handling of the fragile fibers is greatly reduced, reducing the chance for damage. This advantage is particularly important for asymmetric hollow fiber membranes which have a thin, dense skin supported by a more open wall structure. The thin skin of the asymmetric membrane is susceptible to damage which adversely effects performance of the permeator.

The configuration of the permeator and the tubesheet contained therein are well-known. The cross-sectional configuration (i.e., the configurations lying in a plane perpendicular to the longitudinal orientation of the hollow fiber membranes) of tubesheets is usually generally circular. It is also apparent that the cross-sectional configuration may be in any other form such as triangular, trilobal, square, rectangular, trapezoidal, pentagonal, hexagonal, free form, or the like. The use of the tubesheet preform facilitates the manufacture of bundles with tubesheets having a variety of geometries. The maximum cross-sectional dimension of the tubesheet may also vary substantially. For instance, the maximum cross-sectional dimension of the tubesheet may be as little as 5 centimeters for laboratory-scale experimentation to 50 centimeters or more, preferably 10 to 30 centimeters, for treating large volume fluid streams. The face of the tubesheet may be any suitable configuration and is generally substantially the same configuration as the cross-sectional configuration of the tubesheet. The face may be substantially flat or may be curved or irregular in surface contour.

The hollow fiber membranes may be of any convenient configuration, e.g., circular, hexagonal, trilobal, or the like in cross-section and may have ridges, grooves, or the like extending inwardly or outwardly from the walls of the hollow fiber membranes. Generally, the maximum outside cross-sectional dimension of the hollow fiber membranes is at least about 50 microns and often is up to about 500 or more microns. In many instances, it is preferred that the maximum interior dimension (maximum bore dimension) of the hollow fiber membranes be at least about 30 to about 300 microns. The ratio of the wall thickness to maximum outside dimension of the hollow fiber membranes is frequently about 0.05 to 0.50, preferably, about 0.2 to 0.4. The hollow fiber membranes may be isotropic, i.e., having substantially the same structure throughout the thickness of the wall, or anisotropic, i.e., having one or more regions within the thickness of the wall having a more dense structure. The hollow fiber membranes are useful in fluid separations, i.e., they may serve as the support for coating which provides selective separation or as the medium which effects the separation.

Advantageously, this invention enables a wide range of materials to be employed for the fabrication of the hollow fiber membranes. Preferably, the materials used to fabricate the hollow fiber membranes are elastic and do not smear when the tubesheet is machined or the bores of the hollow fibers are severed with, for example, a knife. Smearing of the hollow fiber membrane may disadvantageously cause the membrane to distort or close, ultimately decreasing the performance of the permeator. The material for the hollow fiber membranes may be synthetic or natural and may be inorganic, organic or organic mixed with inorganic. Typical inorganic materials for the hollow fiber membranes may be glasses, ceramics, cermets, metals, and the like. The organic materials are generally polymeric in nature. Typical polymers suitable for the hollow fiber membranes can be substituted or unsubstituted polymers and may be selected from polysulfones; poly(styrenes), including styrene-containing copolymers such as acrylonitrile-styrene copolymers, styrene-butadiene copolymers and styrene-vinylbenzylhalide copolymers; polycarbonates; cellulosic polymers, such as cellulose acetate-butyrate; cellulose propionate, ethyl cellulose, methyl cellulose, nitrocellulose, etc.; polyamides and polyimides, including aryl polyamides and aryl polyimides; polyethers; poly(arylene oxides) such as poly(pheynylene oxide) and poly(xylylene oxide); poly(esteramide-diisocyanate); polyurethanes; polyesters (including polyarylates) such as poly(ethylene terephthalate), poly(alkyl methacrylates), poly(alkyl acrylates), poly(phenylene terephthalate), etc.; polysulfides; poly(siloxanes); polymers from monomers having the alpha-olefinic unsaturation other than mentioned above such as poly(ethylene), poly(propylene), poly(butene-1), poly(4-methyl pentene-1), polyvinyls, e.g., poly(vinyl chloride), poly(vinyl fluoride), poly(vinylidene chloride), poly(vinylidene fluoride), poly(vinyl alcohol), poly(vinyl esters) such as poly(vinyl acetate) and poly(vinyl propionate), poly(vinyl pyridines), poly(vinyl pyrrolidones), poly(vinyl ethers), poly(vinyl ketones), poly(vinyl aldehydes) such as poly(vinyl formal) and poly(vinyl butyral), poly(vinyl amides), poly(vinyl amines), poly(vinyl phosphates), and poly(vinyl sulfates), polyallyls; poly(benzobenzimidazole); polyhydrazides; polyoxadiazones; polytriazoles; poly(benzimidazole); polycarbodiimides; polyphosphazines, etc. and interpolymers, including block interpolymers containing repeating units from the above and grafts and blends containing any of the foregoing. Typical substituents providing substituted polymers include halogens such as fluoride, chloride and bromine; hydroxy groups, lower alkyl groups; lower alkoxy groups, monocyclic aryl; lower acyl groups and the like. The polymer may contain modifiers, plasticizers, fillers, etc.

The potting material to form the tubesheet may be comprised of any suitable material. Advantageously, this invention enables a wide range of materials to be employed as the potting material. Preferably the potting material can be in an essentially liquid form when preparing the tubesheet and can thereafter be solidified, e.g., by cooling, curing, or the like. The solidified potting material should be relatively inert to moieties to which it will be exposed during fluid separation operation. The strength of the potting material is not critical, as the tubesheet preform will provide the tubesheet with superior strength and reinforcement.

The potting material may be organic, inorganic or organic containing inorganic material, and the potting material may be natural or synthetic. Typical inorganic materials include glasses, ceramics, cermets, metals, and the like. Conveniently, the potting material comprises a solidifiable resin. Typical resins include phenolaldehyde resins, melamine-aldehyde resins, thermosetting artificial rubbers, acrylic resins, urethane resins, silicone resins, polysulfides, acetals, cellulosics, fluorocarbons, vinyls, styrenes, polyethylene, polypropylene, and other olefinically-unsaturated monomers, and the like. Particularly attractive potting materials are the epoxy resins, e.g., from polyglycyl resins preferably containing one or more diglycidyl ethers derived from resorcinol, catechol, hydroquinone, phlorogluicine, 4,4'-dihydroxybenzophenone, 1,1-bis(4-hydroxyphenyl) ethane, 2,2-bis(4-hydroxyphenyl) propane (Bisphenol A), bis(2-hydroxynaphthyl) methane, 2,2-bis(4-hydroxyphenyl) butane, 4,4'-dihydroxyphenyl phenyl sulfone, ethylene glycol, propylene glycol, butanediol, pentanediol, isopentanediol, in oleic dimer acid, poly(oxypropylene) glycol, 2,4,4'-trihydroxybisphenyl, 2,2'-4,4'-tetrahydroxybisphenyl, Bis-resorcinol F, 2,2'-4,4'-tetrahydroxybenzophenone, 1,1-bis(hydroxyphenyl) cyclohexane, bisphenol-hexafluoooroacetone, aniline, paraaminophenol, isocyanurate, cyanuiric chloride, hydantoin, tetraphenylene ethene, phenol-formaldehyde novolac, o-creson-formaldehyde novolac, cycloaliphatic epoxy resins, and the like. These resins may be substituted, e.g., with hydroxyl or halogen moieties, e.g., fluoride, chlorine and bromine (such as tetrabrominated bisphenol A).

Commonly, the epoxy is cured with a curing agent. Curing agents are well known in the art. The potting material may contain other components such as plasticizers, bond promoting agents, cure accelerators, thickening agents, dyes and pigments.

## Claims

1. A method of fabricating a tubesheet for a hollow fiber membrane permeator from a set of hollow fiber membranes, comprising the steps of (a) subdividing a set of hollow fibers into a plurality of elementary bundles, (b) enclosing at least a first end of each elementary bundle in a tubesheet preform, and (c) bonding all of said first ends together using a potting material.

2. A tubesheet for a hollow fiber membrane comprising a tubesheet preform having cells surrounding respective ends of a plurality of elementary bundles of hollow fiber membranes.

3. A tubesheet of claim 2 in which the tubesheet preform furnishes the principal load-bearing reinforcement to the tubesheet.

4. A tubesheet made from the method of claim 1.

5. A tubesheet of claim 4 in which the tubesheet preform furnishes the principal load-bearing reinforcement to the tubesheet.

6. A tubesheet of claim 2 in which the tubesheet preform has a rigid peripheral wall.

7. A tubesheet of claim 6 in which the cells are rigidly connected to said rigid peripheral wall.

8. A tubesheet of claim 2 in which the cells and the hollow fiber membranes are bonded together with a potting material.

9. A tubesheet of claim 6 in which the cells, the hollow fiber membranes and the rigid peripheral wall are bonded togehter with a potting material.

10. A hollow fiber membrane permeator comprising a permeator shell, a bundle of hollow fiber membranes and one or more tubesheets of claims 2-9.

11. A hollow fiber membrane permeator of claim 10 in which a reinforcing element rigidly connects one or more of the tubesheet preforms to the permeator shell.

12. A hollow fiber membrane permeator of claim 10 having means for introducing a sweep gas to the hollow fiber membranes.
